# EUROPÄISCHE PATENTSCHRIFT

(11) **EP 4 168 263 B1**
(45) Veröffentlichungstag und Bekanntmachung des Hinweises auf die Patenterteilung: **07.01.2026**
(21) Anmeldenummer: 21734107.2
(22) Anmeldetag: 17.06.2021
(51) Int. Cl.: B60K 6/365, B60K 6/48, B60K 6/383, B60K 6/387

(54) **KRAFTFAHRZEUG MIT EINEM PARALLELEN HYBRIDANTRIEB**
MOTOR VEHICLE WITH PARALLEL HYBRID DRIVE
VÉHICULE AUTOMOBILE À PROPULSION HYBRIDE PARALLÈLE

(30) Priorität: 17.06.2020 DE 102020003597
(43) Veröffentlichungstag der Anmeldung: 26.04.2023
(73) Patentinhaber: Rheinisch-Westfälische Technische Hochschule (RWTH) Aachen, 52062 Aachen (DE)
(72) Erfinder: JANSSEN, Peter, 6051 Maasbracht (NL); ANDERT, Jakob, 52066 Aachen (DE); ENGELS, Michael, 52064 Aachen (DE)
(74) Vertreter: Ruttensperger Lachnit Trossin Gomoll
(86) Internationale Anmeldenummer: PCT/EP2021/066463
(87) Internationale Veröffentlichungsnummer: WO 2021/255188

(56) Entgegenhaltungen:
- EP-A2- 1 574 379
- WO-A1-2018/046039
- DE-A1- 102009 019 485
- JP-A- H0 914 385
- US-A- 5 433 282

## Beschreibung

Die Erfindung betrifft ein Kraftfahrzeug mit einem parallelen Hybridantrieb.

Aus der DE10049514B4 ist ein Hybridantrieb, umfassend ein Planetengetriebe, eine Verbrennungskraftmaschine, eine Elektrokraftmaschine und zwei Kupplungen bekannt.

In der DE 10 2004 005 349 A1 ist ein Hybridmotor mit einer Verbrennungskraftmaschine und mit einem Elektromotor beschrieben, die über ein Planetengetriebe miteinander in Verbindung stehen

In der DE 10 2017 214 039 A ist ein elektrisches Startsystem für Kraftfahrzeuge beschrieben.

In der EP 1 314 884 B1 ist ein Verfahren zum Betreiben eines Motors und eine Startvorrichtung für den Motor beschrieben.

Die US 5,433,282 A beschreibt ein Hybridfahrzeug mit einem Verbrennungsmotor und einem Elektromotor.

Die DE 10 2009 019 485 A1 beschreibt einen Antriebsstrang mit einem ersten Elektromotor und einem Planetengetriebe.

Die JP H09 14385 A beschreibt eine Antriebseinheit für Hybridfahrzeuge.

Die EP 1 574 379 A2 und die WO 2018/046039 A1 beschreiben jeweils einen Motorroller mit einem Hybridantrieb.

Die Erfindung ist ein Kraftfahrzeug mit einem parallelen Hybridantrieb mit den Merkmalen des Anspruchs 1.

Der parallele Hybridantrieb für das Kraftfahrzeug umfasst
a) eine elektrische Maschine, welche motorisch und generatorisch betreibbar ist,
b) eine Verbrennungskraftmaschine,
c) eine Antriebsachse,
d) ein Umlaufrädergetriebe, umfassend
   - eine erste Welle, welche mit der elektrischen Maschine verbunden ist,
   - eine zweite Welle, welche mit der Verbrennungskraftmaschine verbunden ist und
   - eine dritte Welle, welche mit der Antriebsachse verbunden ist,
e) ein Schaltelement, welches dazu ausgebildet ist, mindestens zwei Wellen des Umlaufrädergetriebes fest miteinander zu verbinden, und
f) ein erstes Bremselement, welches dazu ausgebildet ist, eine Drehung der Verbrennungskraftmaschine in einer Drehrichtung zu unterbinden.

Dadurch, dass das erste Bremselement dazu ausgebildet ist, eine Drehung der Verbrennungskraftmaschine in einer Drehrichtung zu unterbinden, kann die Antriebsachse unabhängig von der Verbrennungskraftmaschine mittels der elektrischen Maschine angetrieben werden. Dies ermöglicht einen rein elektrischen Antrieb des Kraftfahrzeugs.

Das erste Bremselement kann beispielsweise dazu ausgebildet sein, eine Drehung der Verbrennungskraftmaschine in eine Rückwärtsrichtung zu blockieren. Das erste Bremselement kann dazu ausgebildet sein, eine Abtriebswelle der Verbrennungskraftmaschine an einem Gehäuse des Hybridantriebs festzusetzen. Das erste Bremselement kann beispielsweise reibschlüssig oder formschlüssig arbeitend ausgebildet sein. Das erste Bremselement kann dazu ausgebildet sein, durch dessen Betätigung die Abtriebswelle mit dem Gehäuse drehfest zu verbinden. Durch die Betätigung kann das erste Bremselement beispielsweise geschlossen werden. Eine drehfeste Verbindung kann eine gleiche Drehbewegung der beiden verbundenen Bauteile bedingen. Aufgrund eines gewollten oder ungewollten Schlupfes kann dabei eine Drehzahldifferenz vorliegen, wobei die Drehbewegungen dennoch als gleich anzusehen sind.

Das erste Bremselement kann beispielsweise selbsttätig schaltend ausgebildet sein. Das kann bedeuten, dass das erste Bremselement selbsttätig schließen und öffnen kann. Im Gegensatz zu einem aktiv schaltbaren Bremselement kann so auf jeweilige Aktuatoren zum Betätigen des ersten Bremselements verzichtet werden und die Betätigung erfolgt durch den Betrieb des Hybridantriebs selbsttätig, beispielsweise aufgrund jeweiliger Zustände der elektrischen Maschine und der Verbrennungsmotors.

So kann der Hybridantrieb kompakt und kostengünstig sein. Zudem ist keine manuelle Betätigung des Bremsenelements notwendig. Dadurch wird die Bedienung des Kraftfahrzeugs vereinfacht.

Das erste Bremselement kann dazu ausgebildet sein, in Abhängigkeit von einer ersten Drehrichtung der Verbrennungskraftmaschine selbsttätig die Abtriebswelle der Verbrennungskraftmaschine festzusetzen. Das erste Bremselement kann dazu ausgebildet sein, in Abhängigkeit von einer dazu entgegengesetzten zweiten Drehrichtung der Verbrennungskraftmaschine selbsttätig die Abtriebswelle der Verbrennungskraftmaschine freizugeben. Das erste Bremselement kann beispielsweise als Freilauf ausgebildet sein, insbesondere als Rollenfreilauf. Ein Beispiel für ein Rollenfreilauf ist ein Kugellager, welches dazu ausgebildet ist, in der ersten Drehrichtung ein Drehen einer daran gelagerten Welle zu blockieren und in der dazu entgegengesetzten zweiten Drehrichtung zu blockieren.

Das erste Bremselement kann alternativ oder zusätzlich dazu ausgebildet sein, aktiv geschaltet zu werden. Der Hybridantrieb kann dafür ein Bremsbetätigungselement aufweisen. Ein rein aktiv schaltbares Bremselement kann einfacher und kostengünstiger sein als ein rein selbsttätig schaltendes Bremselement, da es frei von drehenden Teilen sein kann oder zumindest weniger drehende Teile aufweisen kann. Durch ein aktiv schaltbares erstes Bremselement kann eine Rekuperation durch die elektrische Maschine in mehr Zuständen des Hybridantriebs ermöglicht werden. Das aktiv schaltbare erste Bremselement kann beispielsweise auch die zweite Welle festsetzen. Das aktiv schaltbare erste Bremselement kann dazu ausgebildet sein, eine Drehung der Verbrennungskraftmaschine in beide Drehrichtungen zu unterbinden.

Die Abtriebswelle der Verbrennungskraftmaschine kann mit der zweiten Welle permanent drehfest verbunden sein. Beispielsweise können die Abtriebswelle der Verbrennungskraftmaschine und die zweite Welle des Umlaufrädergetriebes einstückig ausgebildet sein oder miteinander verschweißt oder verschraubt sein. Das erste Bremselement dient also beispielsweise nicht dazu, die Verbindung der Verbrennungskraftmaschine mit der zweiten Welle des Umlaufrädergetriebes zu trennen oder herzustellen.

Das Umlaufrädergetriebe kann beispielsweise als Planetengetriebe ausgebildet sein.

Das Planetengetriebe kann nur einen Planetenradsatz aufweisen. Der Planetenradsatz kann beispielsweise als Minus-Planetenradsatz oder Plus-Planetenradsatz ausgebildet sein. Der Planetenradsatz kann eine Sonnenradwelle, eine Stegwelle und eine Hohlradwelle aufweisen. An der Stegwelle kann ein Satz von Planetenrädern drehbar gelagert sein. Jedes Planetenrad kann beispielsweise mit der Sonnenradwelle und der Hohlradwelle kämmen. Der Hybridantrieb kann frei von weiteren als den hier beschriebenen Bremselementen und weiteren Schaltelementen sein.

Vorzugsweise ist die erste Welle des Umlaufrädergetriebes als Hohlradwelle ausgebildet, die zweite Welle des Umlaufrädergetriebes als Sonnenradwelle und die dritte Welle des Umlaufrädergetriebes als Stegwelle. Dadurch können sich günstige Übersetzungsverhältnisse ergeben, insbesondere da die elektrische Maschine üblicherweise bei höheren Drehzahlen am effizientesten arbeitet und die Verbrennungskraftmaschine relativ dazu bei niedrigeren Drehzahlen.

Erfindungsgemäß umfasst der parallele Hybridantrieb des Kraftfahrzeugs eine Drosselklappensteuerung, die dazu ausgebildet ist, ein Drehmoment der Verbrennungskraftmaschine bei einer vorgegebenen Drehzahl einzustellen. Eine Definition der Betriebsdrehzahl erfolgt dabei mittels des Elektromotors. Dabei ist die Drosselklappensteuerung direkt mechanisch ausgeführt.

Eine direkte mechanische Drosselklappensteuerung wird erfindungsgemäß durch einen Bowdenzug bereitgestellt. Die Drosselklappensteuerung weist ein Betätigungselement auf. Das Betätigungselement ist zum Verstellen der Drosselklappe der Verbrennungskraftmaschine mit der Drosselklappe direkt mechanisch verbunden sein. Beispielsweise kann das Betätigungselement als Drehgriff eines Lenkers eines Motorrollers, welcher den Hybridantrieb aufweist, ausgebildet sein. Das Betätigungselement kann dazu ausgebildet sein, ein durch die Verbrennungskraftmaschine erzeugtes Drehmoment einzustellen, beispielsweise indem eine Luftzufuhr zu der Verbrennungskraftmaschine gesteuert wird. Dafür ist das Betätigungselement bei der direkt mechanisch ausgeführten Drosselklappensteuerung mittels des Bowdenzugs mit der Drosselklappe verbunden. Bei der Verbrennungskraftmaschine kann also beispielsweise ein erzeugtes Drehmoment durch einen Fahrer durch Betätigen des Betätigungselements geändert werden.

Dadurch kann im Gegensatz zu einer elektrisch gesteuerten Drosselklappe eine Signalüberwachung vereinfacht werden oder sogar gänzlich auf eine Signalüberwachung verzichtet werden. Es ist zudem keine Redundanz und Plausibilisierung bei der Drosselklappensteuerung erforderlich, um Anforderungen an die funktionale Sicherheit zu erfüllen.

Die elektrische Maschine kann beispielsweise dazu ausgebildet sein, drehzahlgesteuert zu werden. Die elektrische Maschine kann einen Inverter aufweisen, mittels welchem eine Drehzahl und/oder eine Drehmomentabgabe der elektrischen Maschine einstellbar ist.

Die elektrische Maschine wird ebenfalls mittels des Betätigungselements gesteuert. Dazu weist das Betätigungselement einen Sensor auf, welcher dazu ausgebildet ist, eine Stellung des Betätigungselements zu erfassen. Diese Stellung wird an den Inverter übermittelt. Der Inverter ist dazu ausgebildet, die elektrische Maschine in Abhängigkeit von der erfassten Stellung des Inverters zu steuern.

Der Hybridantrieb des erfindungsgemäßen Kraftfahrzeugs kann besonders simpel und kostengünstig sein, weil das Betätigungselement der Drosselklappensteuerung auch dazu ausgebildet ist, die elektrische Maschine zu steuern. Beispielsweise kann mittels des Drehgriffs des Motorrollers eine Drosselklappenstellung proportional zu einer Drehstellung des Drehgriffs eingestellt und ein Steuersignal für die elektrische Maschine erzeugt werden. Dadurch kann auch eine elektrische Steuerung des elektrischen Motors einfach sein.

Vorzugsweise umfasst der parallele Hybridantrieb des Kraftfahrzeugs einen Energiespeicher, welcher dazu ausgebildet ist, die elektrische Maschine mit elektrischer Energie zu versorgen und von der elektrischen Maschine aufgeladen zu werden, und ein zweites Bremselement, welches dazu ausgebildet ist, die Antriebsachse bei einem ortsfesten Ladevorgang des Energiespeichers zu blockieren. Bevorzugt ist das zweite Bremselement eine Radbremse. Das zweite Bremselement kann eine Fahrbremse des Kraftfahrzeugs bilden. Dadurch kann eine Bremselementzahl gering sein und beispielsweise auf zwei oder drei Bremselemente beschränkt sein. Bei drei Bremselementen kann ein drittes Bremselement dazu ausgebildet sein, eine nicht angetriebene Achse des Kraftfahrzeugs zu bremsen, welche zum Beispiel als Vorderachse ausgebildet ist. Während des Fahrens kann das zweite Bremselement und optional das dritte Bremselement eine Fahrgeschwindigkeit des Kraftfahrzeugs bremsen. Dafür kann das zweite Bremselement und optional das dritte Bremselement von dem Fahrer des Kraftfahrzeugs betätigt werden. Die Betätigung des zweiten Bremselements und des dritten Bremselements kann aneinander gekoppelt sein, sodass immer nur eine gemeinsame Betätigung möglich ist. Ein Betrieb der Verbrennungskraftmaschine bei gebremster Antriebsachse ermöglicht ein ortsfestes Laden des Energiespeichers. Weiterhin ermöglicht ein Betrieb der elektrischen Maschine bei gebremster Antriebsachse einen Start der Verbrennungskraftmaschine aus einem Stillstand. Das zweite Bremselement kann zu diesem Zweck dazu ausgebildet sein, durch eine Betätigung dauerhaft in einen geschlossenen Zustand verstellt zu werden. Beispielsweise kann das zweite Bremselement dazu ausgebildet sein, nach Art einer Handbremse dauerhaft geschlossen zu werden.

Der Hybridantrieb des Kraftfahrzeugs kann also dazu ausgebildet sein, den Energiespeicher durch Antreiben der elektrischen Maschine mit der Verbrennungskraftmaschine zu laden. Alternativ oder zusätzlich kann der Hybridantrieb auch dazu ausgebildet sein, den Energiespeicher durch ein Bremsen des Kraftfahrzeugs mit der elektrischen Maschine zu laden. Der Energiespeicher kann über den Inverter mit der elektrischen Maschine elektrisch verbunden sein.

Der Hybridantrieb des Kraftfahrzeugs kann eine Ladesteuerung aufweisen. Die Ladesteuerung kann als Teil der elektrischen Maschine ausgebildet sein. Die Ladesteuerung kann durch den Inverter gebildet sein oder diesen aufweisen. Die Ladesteuerung kann dazu ausgebildet sein, der elektrischen Maschine in Abhängigkeit von einem Ladezustand des Energiespeichers zu steuern. Beispielsweise kann die Ladesteuerung automatisch ein Laden des Energiespeichers während einer Fahrt mit dem Kraftfahrzeug bewirken oder eine Drehzahl und/oder eine Leistungsabgabe des Elektromotors reduzieren, wenn der Ladezustand unter einen Schwellwert fällt. Die Ladesteuerung kann dazu ausgebildet sein, die Steuerung der elektrischen Maschine in Abhängigkeit von der Stellung des Betätigungselements gemäß dem Ladezustand des Energiespeichers zu modifizieren. Beispielsweise kann die Ladesteuerung eine Kennlinie der elektrischen Maschine, welche deren Drehzahl relativ zu der Stellung des Betätigungselements vorgibt, modifizieren, insbesondere durch eine Verschiebung. Dadurch ist die Hybridantriebssteuerung sehr einfach, robust und von geringer Komplexität. Bei einem geringen Ladezustand kann ein Gesamtdrehmoment des Hybridantriebs im Vergleich zu einem hohen Ladezustand reduziert sein. Dies kann der Fahrer jedoch intuitiv und einfach durch eine angepasste Betätigung kompensieren. Beispielsweise kann der Fahrer den Drehgriff des Motorrollers weiter hin zu einer höheren Antriebsleistung verdrehen, um auch bei geringem Ladezustand eine gewünschte Leistungsabgabe zu erzielen. Im Vergleich zu einem hohen Ladezustand wird dann ein größerer Anteil der Leistung durch die Verbrennungskraftmaschine bereitgestellt. Dafür muss beispielsweise keine komplexe Regelung vorgesehen werden, sondern die direkte mechanische Drosselklappensteuerung ermöglicht dem Fahrer entsprechend durch seine Steuerung zu kompensieren. So kann zudem beispielsweise sichergestellt werden, dass eine ausreichende Restladung verbleibt, um den Verbrennungsmotor auch nach Fahrtende nochmals mit der elektrischen Maschine starten können. Zudem kann so der Energiespeicher auch zur Stromversorgung anderer Systeme des Kraftfahrzeugs genutzt werden, ohne dass deren Ausfall aufgrund eines völligen Entleerens des Energiespeichers durch die elektrische Maschine droht.

Der Hybridantrieb des Kraftfahrzeugs kann eine Ladevorrichtung aufweisen, welche dazu ausgebildet ist, den Energiespeicher mit einer fahrzeugexternen Energiequelle zu laden. Beispielsweise kann die Ladevorrichtung ein Laden des Energiespeichers durch Anschluss an ein nationales Stromnetz ermöglichen.

Durch das Verbinden der mindestens zwei Wellen des Umlaufrädergetriebes mittels des Schaltelements kann das Umlaufrädergetriebe verblockt werden. Bei einem verblockten Umlaufrädergetriebe drehen die Sonnenradwelle, die Stegwelle und die Hohlradwelle mit der gleichen Geschwindigkeit. Entsprechend wälzen die Planetenräder nicht mehr mit deren Verzahnungen an der Sonnenradwelle und der Hohlradwelle, wodurch das Umlaufrädergetriebe im blockierten Zustand eine sehr hohe Effizienz aufweist. Vorzugsweise ist das Schaltelement dazu ausgebildet, die dritte Welle des Umlaufrädergetriebes mit der ersten Welle oder der zweiten Welle des Umlaufrädergetriebes zu verbinden.

Das Schaltelement ist selbsttätig schaltend ausgebildet. Im Gegensatz zu einem aktiv schaltbaren Schaltelement kann so auf jeweilige Aktuatoren zum Betätigen des Schaltelements verzichtet werden. So kann der Hybridantrieb kompakt und kostengünstig sein. Zudem ist keine manuelle Betätigung des Schaltelements notwendig. Dadurch wird die Bedienung des Kraftfahrzeugs vereinfacht.

Das Schaltelement ist erfindungsgemäß dabei dazu ausgebildet, in Abhängigkeit von einer Drehzahl der dritten Welle des Umlaufrädergetriebes zu schalten. Dafür kann das Schaltelement beispielsweise an einer Seite mit der dritten Welle verbunden sein. Beim Schalten kann eine Verbindung zwischen den zwei Wellen des Umlaufrädergetriebes hergestellt bzw. getrennt werden. Die Drehzahl der dritten Welle des Umlaufrädergetriebes kann der Drehzahl der Antriebsachse entsprechen und damit zu einer Fahrgeschwindigkeit des Fahrzeugs korrespondieren. Das Schaltelement kann dazu ausgebildet sein, bei Überschreiten einer Grenzdrehzahl durch die Drehzahl der dritten Welle des Umlaufrädergetriebes die wenigstens zwei Wellen des Umlaufrädergetriebes miteinander zu verbinden. Damit kann der Hybridantrieb des Kraftfahrzeugs automatisch ab einer gewissen Fahrgeschwindigkeit in den verblockten Zustand verstellt werden und somit bei hohen Geschwindigkeiten besonders effizient arbeiten. Zudem kann so eine besonders hohe Leistung durch eine Addition von Antriebskräften im Umlaufrädergetriebe bewirkt werden, was eine besonders hohe Fahrgeschwindigkeit ermöglichen kann. Durch die dabei effiziente Kraftübertragung im Umlaufrädergetriebe kann der Hybridantrieb im Vergleich zu herkömmlichen Antrieben mit gleichen Motoren potenziell mehr Leistung an jeweiligen angetriebenen Wellen bereitstellen.

Das selbsttätig schaltende Schaltelement ist erfindungsgemäß als Fliehkraftkupplung ausgebildet. Das Schaltelement ist beispielsweise als reibschlüssige Kupplung ausgebildet. Das Schaltelement ist dazu ausgebildet, durch dessen Betätigung wenigstens zwei Wellen drehfest miteinander zu verbinden.

Vorzugsweise sind das erste Bremselement und das Schaltelement jeweils selbsttätig schaltend ausgebildet. Dadurch ist durch den Fahrer des Kraftfahrzeugs keine Schaltung des Getriebes notwendig, wodurch das Kraftfahrzeug extrem einfach zu bedienen ist. Beispielsweise muss der Fahrer nur noch Lenken, die Leistungsabgabe von beiden Motoren durch ein gemeinsames Betätigungselement steuern und gegebenenfalls Bremsen. Weitere Tätigkeiten sind zum Steuern des Antriebs, insbesondere zum Fahren mit dem Kraftfahrzeug, über dessen gesamten möglichen Geschwindigkeitsbereich beispielsweise nicht notwendig.

Das Kraftfahrzeug kann als Kraftrad ausgebildet sein. Es umfasst den parallelen Hybridantrieb und ein Hinterrad, welches durch den Hybridantrieb angetrieben wird. Ein Beispiel für ein Kraftrad ist ein Motorroller. Der Hybridantrieb eignet sich aufgrund seiner kompakten und kostengünstigen Bauweise auch sehr gut für andere Kleinfahrzeuge, wie beispielsweise Schneemobile, Quads oder Buggys. Im Gegensatz zu einer Kraftübertragung mittels eines Riemens kann durch den Hybridantirieb beispielsweise bis zu 25% Kraftstoff eingespart werden und/oder gegebenenfalls eine höhere Antriebsleistung bereitgestellt werden.

Der Verbrennungsmotor kann beispielsweise als Zweitaktmotor oder Viertaktmotor ausgebildet sein. Die elektrische Maschine kann dazu ausgebildet sein, elektrische Leistung in mechanische Leistung umzuwandeln. Die elektrische Maschine kann beispielsweise als Wechselstrommotor ausgebildet sein.

Ein beispielhaftes Verfahren zum Betreiben eines parallelen Hybridantriebs mit einem Umlaufrädergetriebe in einem Direktantriebsmodus umfasst die Schritte:
A1: Antreiben einer ersten Welle des Umlaufrädergetriebes mit einer elektrischen Maschine;
A2: Antreiben einer zweiten Welle des Umlaufrädergetriebes mit einer Verbrennungskraftmaschine;
A3: Übertragen von Bewegungen der ersten Welle und der zweiten Welle auf eine dritte Welle des Umlaufrädergetriebes, wobei mindestens zwei Wellen des Umlaufrädergetriebes mittels eines geschlossenen Schaltelements fest miteinander verbunden sind.

Dadurch, dass mindestens zwei Wellen des Umlaufrädergetriebes fest miteinander verbunden sind, können Wandlungsverluste im Umlaufrädergetriebe vermieden werden. Die Drehmomente der elektrischen Maschine und der Verbrennungskraftmaschine werden in diesem Modus addiert. Dieser Modus ist, wie zuvor beschrieben, besonders geeignet für hohe Fahrgeschwindigkeiten.

Ein beispielhaftes Verfahren zum Betreiben eines parallelen Hybridantriebs mit einem Umlaufrädergetriebe in einem rein elektrischen Modus umfasst die Schritte:
B1: Antreiben einer ersten Welle des Umlaufrädergetriebes mit einer elektrischen Maschine;
B2: Unterbinden einer Rückwärtsdrehung einer Verbrennungskraftmaschine, welche mit einer zweiten Welle des Umlaufrädergetriebes verbunden ist, mittels eines ersten Bremselements;
B3: Übertragen einer Bewegung der ersten Welle auf eine dritte Welle des Umlaufrädergetriebes.

Dadurch ist beispielsweise ein morgendliches Losfahren möglich, ohne Anwohner zu wecken. Die Verbrennungskraftmaschine kann dazu ausgebildet sein, ab Überschreiten der Grenzgeschwindigkeit selbsttätig gestartet zu werden. So kann die Verbrennungskraftmaschine beispielsweise automatisch zugeschaltet werden, wenn eine Geschwindigkeit von Wohnstraßen überschritten wird, um dann mehr Leistung und noch höhere Fahrgeschwindigkeiten bereitstellen zu können. Ist das Schaltelement selbsttätig schaltend ausgebildet, kann die Verbrennungskraftmaschine bei Überschreiten der Schaltdrehzahl beispielsweise durch die Trägheit des Hybridantriebs automatisch gestartet werden.

Ein beispielhaftes Verfahren zum Betreiben eines parallelen Hybridantriebs mit einem Umlaufrädergetriebe in einem CVT Modus umfasst die Schritte:
C1: Antreiben einer ersten Welle des Umlaufrädergetriebes mit einer elektrischen Maschine;
C2: Antreiben einer zweiten Welle des Umlaufrädergetriebes mit einer Verbrennungskraftmaschine;
C3: Übertragen von Bewegungen der ersten Welle und der zweiten Welle auf eine dritte Welle des Umlaufrädergetriebes, wobei alle Wellen des Umlaufrädergetriebes gegeneinander drehbar sind.

Die Betriebsdrehzahl der Verbrennungskraftmaschine kann bei einer vorgegebenen Geschwindigkeit in diesem Modus von der Drehzahl der elektrischen Maschine abhängen. So wird eine Drehzahlsteuerung der Verbrennungskraftmaschine durch die elektrische Maschine ermöglicht.

Bevorzugte Ausführungsbeispiele werden anhand der folgenden Figuren näher erläutert. Dabei zeigt
- Figur 1: ein Ausführungsbeispiel eines parallelen Hybridantriebs für ein erfindungsgemäßes Kraftfahrzeug,
- Figur 2: ein Ausführungsbeispiel eines beispielhaften Verfahrens zum Betreiben des parallelen Hybridantriebs in einem Direktantriebsmodus,
- Figur 3: ein Ausführungsbeispiel eines beispielhaften Verfahrens zum Betreiben des parallelen Hybridantriebs in einem rein elektrischen Modus und
- Figur 4: ein Ausführungsbeispiel eines beispielhaften Verfahrens zum Betreiben des parallelen Hybridantriebs in einem CVT-Modus.

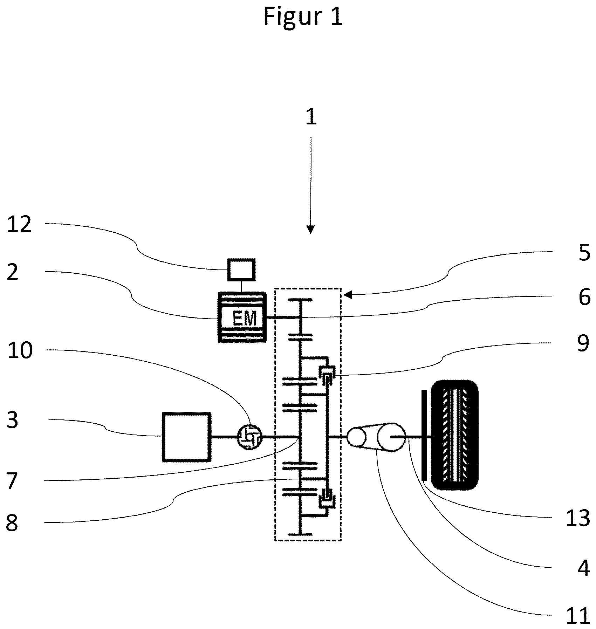

Der in Figur 1 gezeigte parallele Hybridantrieb 1 ist Bestandteil eines Motorrollers (nicht gezeigt) und dazu ausgebildet, ein Hinterrad des Motorrollers anzutreiben. Zu diesem Zweck umfasst der Hybridantrieb 1 eine elektrische Maschine 2 und eine Verbrennungskraftmaschine 3. Die elektrische Maschine ist ein Elektromotor 2, welcher auch als Generator betreibbar ist. Die Verbrennungskraftmaschine ist ein Viertakthubkolbenmotor 3.

Weiterhin umfasst der Hybridantrieb 1 eine Traktionsbatterie 12, die dazu ausgebildet ist, den Elektromotor 2 mit elektrischer Energie zu versorgen und von diesem aufgeladen zu werden.

Der Elektromotor 2 und der Verbrennungsmotor 3 sind durch ein Umlaufrädergetriebe 5 miteinander verbunden. Das Umlaufrädergetriebe 5 umfasst eine erste Welle 6, welche als Hohlradwelle ausgebildet ist, eine zweite Welle 7, welche als Sonnenradwelle ausgebildet ist, und eine dritte Welle 8, welche als Stegwelle ausgebildet ist. Im Ausführungsbeispiel ist die erste Welle 6 mit dem Elektromotor 2 und die zweite Welle 7 mit dem Verbrennungsmotor 3 verbunden. Die dritte Welle 8 des Umlaufrädergetriebes 5 ist mit einer Antriebsachse 4 des Motorrollers über eine Kette 11 verbunden. Die dritte Welle 8 kann in anderen Ausführungsformen auch mittels eines Stirntriebs oder direkt mit der Antriebsachse 4 verbunden sein.

Weiterhin umfasst der Hybridantrieb 1 ein Schaltelement 9. Erfindungsgemäß ist das Schaltelement als Fliehkraftkupplung 9 ausgebildet, welche bei Geschwindigkeiten des Motorrollers unter 30 km/h geöffnet ist. Bei geöffneter Fliehkraftkupplung 9 kann mittels der Verbindung beider Motoren 2, 3 über das Umlaufrädergetriebe 5 eine Drehzahl des Verbrennungsmotors 3 durch den Elektromotor 2 vorgegeben werden. Die Drehzahl des Verbrennungsmotors 3 ist dadurch in einem unteren Geschwindigkeitsbereich des Motorrollers kontinuierlich variierbar.

Weiterhin umfasst der Hybridantrieb 1 eine Drosselklappensteuerung (nicht gezeigt), die dazu ausgebildet ist, ein Drehmoment des Verbrennungsmotors 3 bei einer vom Elektromotor 2 vorgegebenen Drehzahl einzustellen. Die im Ausführungsbeispiel eingesetzte Drosselklappensteuerung ermöglicht eine rein mechanische Laststeuerung des Verbrennungsmotors 3 ohne elektronische Komponenten.

Bei Geschwindigkeiten des Motorrollers über 30 km/h ist die Fliehkraftkupplung 9 geschlossen und verbindet die erste Welle 6 und die dritte Welle 8 fest miteinander. Bei geschlossener Fliehkraftkupplung 9 drehen alle Wellen 6, 7, 8 des Umlaufrädergetriebes 5 mit gleicher Drehzahl. Dies ermöglicht eine motorische Unterstützung des Verbrennungsmotors 3 durch den Elektromotor 2. Die feste Verbindung zwischen den Wellen ermöglicht einen Direktantrieb ohne Wandlungsverluste im Umlaufrädergetriebe.

Des Weiteren umfasst der Hybridantrieb 1 ein erstes Bremselement 10. Im Ausführungsbeispiel ist das erste Bremselement ein Rollenfreilauf 10, welcher zwischen dem Verbrennungsmotor 3 und der zweiten Welle 7 angeordnet ist. Der Freilauf 10 ist dazu ausgebildet, ein Rückwärtsdrehen des Verbrennungsmotors 3 zu unterbinden. Dadurch kann ein Drehmoment zum Antreiben des Motorrollers durch den Elektromotor 2 vorgegeben und bei geöffneter Fliehkraftkupplung 9 unabhängig vom Verbrennungsmotor 3 auf die Antriebsachse 4 übertragen werden. Dies ermöglicht einen rein elektrischen Betrieb des Motorrollers.

Weiterhin umfasst der Hybridantrieb 1 ein zweites Bremselement 13, welches dazu ausgebildet ist, die Antriebsachse 4 abzubremsen. Im Ausführungsbeispiel ist das zweite Bremselement eine Radbremse 13. Durch einen Betrieb des Verbrennungsmotors 3 und gleichzeitiges Blockieren der Antriebsachse 4 mittels der Radbremse 13 wird eine mechanische Energie vom Verbrennungsmotor 3 über das Umlaufrädergetriebe 5 an den Elektromotor 2 übertragen. Der Elektromotor 2 wandelt die mechanische Energie in einem Arbeitsmaschinenbetrieb in eine elektrische Energie um.

Dadurch kann die Traktionsbatterie 12 stationär und unabhängig von externen Stromquellen aufgeladen werden. Weiterhin ermöglicht diese Anordnung ein Starten des Verbrennungsmotors 3 aus einem Stillstand mittels des Elektromotors 2. Zum Starten des Verbrennungsmotors 3 im Stand wird das zum Starten notwendige Drehmoment durch den Elektromotor 2 bereitgestellt und an der Radbremse 13 abgestützt.

Im Folgenden werden verschiedene Betriebsmodi des parallelen Hybridantriebs erläutert.

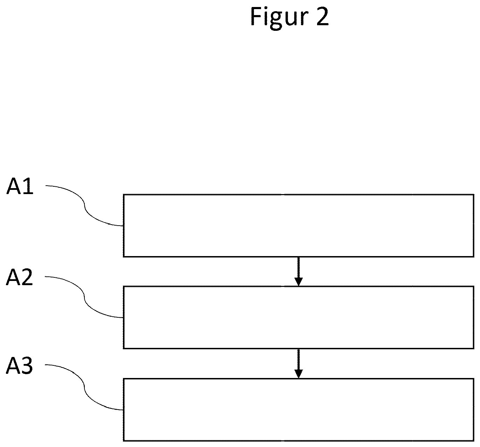

Ein Ausführungsbeispiel eines beispielhaften Verfahrens zum Betreiben des parallelen Hybridantriebs 1 in einem Direktantriebsmodus ist in Figur 2 dargestellt. In diesem Modus ist die Fliehkraftkupplung 9 geschlossen. Alle Wellen des Umlaufrädergetriebes sind fest miteinander verbunden. In einem ersten Schritt des Verfahrens A1 wird die erste Welle 6 des Umlaufrädergetriebes 5 mit dem Elektromotor 2 angetrieben. In einem zweiten Schritt A2 wird die zweite Welle 7 des Umlaufrädergetriebes 5 mit dem Verbrennungsmotor 3 angetrieben. In einem dritten Schritt A3 werden die Bewegungen der ersten Welle 6 und der zweiten Welle 7 auf die dritte Welle 8 des Umlaufrädergetriebes 5 übertragen. Dabei werden die Drehmomente der Motoren 2, 3 addiert, was zu hohen Radrehmomenten führt. Da alle Räder des Umlaufrädergetriebes 5 durch die geschlossene Fliehkraftkupplung 9 fest miteinander verbunden sind, treten im Umlaufrädergetriebe 5 keine nennenswerten Wandlungsverluste auf. Im Vergleich zu üblichen Antrieben mit reibungsverlustbehafteten Getrieben weist der parallele Hybridantrieb 1 im Direktantriebsmodus eine höhere Gesamteffizienz auf. Dadurch kann bei einem Fahrzeugbetrieb Kraftstoff eingespart werden. Die Schritte A1 bis A3 erfolgen im beschriebenen Verfahren gleichzeitig.

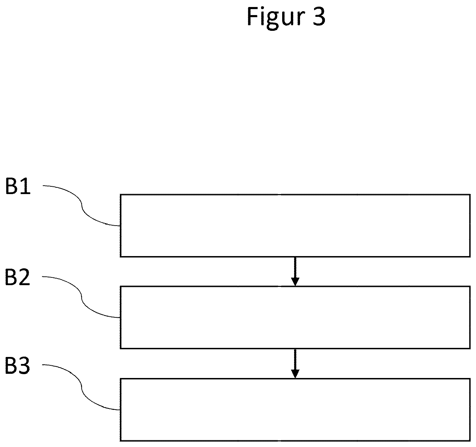

Weiterhin kann der parallele Hybridantrieb 1 mit einem beispielhaften Verfahren in einem rein elektrischen Modus betrieben werden. Eine Variante des Verfahrens ist in Figur 3 dargestellt. In diesem Modus ist die Fliehkraftkupplung 9 geöffnet. In einem ersten Schritt des Verfahrens B1 wird die erste Welle 6 des Umlaufrädergetriebes 5 mit dem Elektromotor 2 angetrieben. In einem zweiten Schritt B2 wird mittels des Freilaufs 10 eine Rückwärtsdrehung des Verbrennungsmotors 3 verhindert. In einem dritten Schritt des Verfahrens B3 wird eine Bewegung der ersten Welle 6 auf eine dritte Welle 8 des Umlaufrädergetriebes 5 übertragen. Im Ausführungsbeispiel resultiert dies in einem rein elektrischen Antrieb des Hinterrades des Motorrollers. Die Schritte B1 bis B3 erfolgen im beschriebenen Verfahren gleichzeitig.

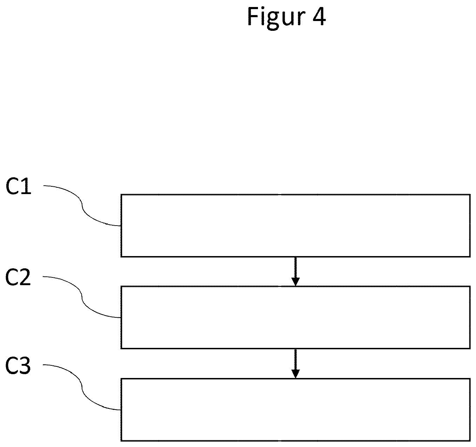

Weiterhin kann der parallele Hybridantrieb 1 mit einem beispielhaften Verfahren in einem CVT-Modus betrieben werden. Eine Variante des Verfahrens ist in Figur 4 dargestellt. In diesem Modus ist die Fliehkraftkupplung 9 geöffnet. Alle Räder des Umlaufrädergetriebes 5 sind gegeneinander drehbar. In einem ersten Schritt des Verfahrens C1 wird die erste Welle 6 des Umlaufrädergetriebes 5 mit dem Elektromotor 2 angetrieben. In einem zweiten Schritt C2 wird eine zweiten Welle 7 des Umlaufrädergetriebes 5 mit einer Verbrennungskraftmaschine 3 angetrieben. In einem dritten Schritt C3 werden Bewegungen der ersten Welle 6 und der zweiten Welle 7 auf eine dritte Welle 8 des Umlaufrädergetriebes 5 übertragen. Die Schritte C1 bis C3 erfolgen im beschriebenen Verfahren gleichzeitig. Die Drehzahl des Verbrennungsmotors 3 kann im Verfahren durch eine Drehzahlregelung des Elektromotors 2 eingestellt werden. Dies ermöglicht einen stufenlosen Betrieb, bei dem die Leistung, welche der Batterie 12 entnommen oder ihr zugeführt wird, ihrem Ladezustand angepasst werden kann. Auf den Einsatz von Anfahrelementen, wie z.B. Reibkupplungen oder Wandlern, kann dabei verzichtet werden. Dadurch werden Verluste bei Anfahrvorgängen im Vergleich zu konventionellen Antrieben mit Anfahrelementen reduziert.

## Patentansprüche

1. Kraftfahrzeug mit einem parallelen Hybridantrieb (1), wobei der Hybridantrieb (1)
a) eine elektrische Maschine (2), welche motorisch und generatorisch betreibbar ist,
b) eine Verbrennungskraftmaschine (3),
c) eine Antriebsachse (4),
d) ein Umlaufrädergetriebe (5), umfassend
- eine erste Welle (6), welche mit der elektrischen Maschine (2) verbunden ist,
- eine zweite Welle (7), welche mit der Verbrennungskraftmaschine (3) verbunden ist, und
- eine dritte Welle (8), welche mit der Antriebsachse (4) verbunden ist,
e) ein Schaltelement (9), welches dazu ausgebildet ist, mindestens zwei Wellen des Umlaufrädergetriebes (5) fest miteinander zu verbinden, und
f) ein erstes Bremselement (10), welches dazu ausgebildet ist, eine Drehung der Verbrennungskraftmaschine (3) in einer Drehrichtung zu unterbinden,
umfasst,
**dadurch gekennzeichnet, dass** das Schaltelement (9) als Fliehkraftkupplung ausgebildet ist und dazu ausgebildet ist, in Abhängigkeit von einer Drehzahl der dritten Welle (8) des Umlaufrädergetriebes selbsttätig zu schalten, dass das Kraftfahrzeug eine direkte mechanische Drosselklappensteuerung aufweist, welche dazu ausgebildet ist, ein Drehmoment der Verbrennungskraftmaschine (3) bei einer von der elektrischen Maschine (2) vorgegebenen Drehzahl einzustellen, und dass das Kraftfahrzeug ein Betätigungselement aufweist, welches mit einer Drosselklappe durch einen Bowdenzug direkt mechanisch verbunden ist und dazu ausgebildet ist, ebenfalls die elektrische Maschine zu steuern, wozu das Betätigungselement einen Sensor aufweist, welcher dazu ausgebildet ist, eine Stellung des Betätigungselements zu erfassen, welche an einen Inverter zur Steuerung der elektrischen Maschine übermittelt wird.

2. Kraftfahrzeug gemäß Anspruch 1, wobei das erste Bremselement (10) dazu ausgebildet ist, selbsttätig zu schalten, insbesondere wobei das erste Bremselement (10) als Freilauf ausgebildet ist.

3. Kraftfahrzeug gemäß einem der vorhergehenden Ansprüche, wobei die erste Welle (6) eine Hohlradwelle ist, die zweite Welle (7) eine Sonnenradwelle ist, und die dritte Welle (8) eine Stegwelle ist.

4. Kraftfahrzeug nach einem der vorhergehenden Ansprüche, wobei die elektrische Maschine (2) dazu ausgebildet ist, bei geöffnetem Schaltelement (9) eine Drehzahl der Verbrennungskraftmaschine (3) vorzugeben.

5. Kraftfahrzeug gemäß einem der vorhergehenden Ansprüche, umfassend einen Energiespeicher (12), welcher dazu ausgebildet ist, die elektrische Maschine (2) mit elektrischer Energie zu versorgen und von der elektrischen Maschine (2) aufgeladen zu werden, und ein zweites Bremselement (13), welches dazu ausgebildet ist, die Antriebsachse (4) bei einem ortsfesten Ladevorgang des Energiespeichers (12) zu blockieren.

6. Kraftfahrzeug nach Anspruch 5, wobei die elektrische Maschine (2) dazu ausgebildet ist, die Verbrennungskraftmaschine (3) bei gebremster Antriebsachse (4) aus einem Stillstand zu starten.

7. Kraftfahrzeug nach einem der vorhergehenden Ansprüche, wobei das Kraftfahrzeug als Motorroller ausgebildet ist.

8. Kraftfahrzeug nach Anspruch 7, wobei das Betätigungselement als Drehgriff eines Lenkers des Motorrollers ausgebildet ist.

9. Kraftfahrzeug nach Anspruch 7 oder 8, wobei der Motorroller ein Hinterrad aufweist, welches durch den Hybridantrieb angetrieben ist.

## Claims

1. Motor vehicle with a parallel hybrid drive (1), wherein the hybrid drive (1) comprises
a) an electric machine (2) operable as a motor and a generator,
b) an internal combustion engine (3),
c) a drive axle (4),
d) an epicyclic gear (5) comprising
- a first shaft (6) which is connected to the electric machine (2),
- a second shaft (7) which is connected to the internal combustion engine (3), and
- a third shaft (8), which is connected to the drive axle (4),
e) a clutch element (9) which is configured to firmly connect at least two shafts of the epicyclic gear (5) to each other, and
f) a first brake element (10) which is configured to prevent rotation of the internal combustion engine (3) in one direction of rotation,
**characterized in**
**that** the first clutch element (9) is configured as a centrifugal clutch (9) and is configured to switch based on a rotational speed of the third shaft (8) of the epicyclic gear, that the motor vehicle comprises a direct mechanical throttle valve control, which is configured to adjust a torque of the internal combustion engine (3) at a speed specified by the electric machine (2) and
**that** the motor vehicle comprises an actuating element, which is connected to a throttle valve by means of a Bowden cable and which is configured to also control the electric machine, for which purpose the actuating element comprises a sensor, which is configured to detect a position of the actuating element, which is transmitted to an inverter for control of the electrical machine.

2. Motor vehicle according to claim 1, wherein the first brake element (10) is configured to switch automatically, in particular wherein the first brake element (10) is configured as a freewheel.

3. Motor vehicle according to any one of the preceding claims, wherein the first shaft (6) is a ring gear shaft, the second shaft (7) is a sun gear shaft, and the third shaft (8) is a carrier shaft.

4. Motor vehicle according to one of the preceding claims, wherein the electric machine (2) is configured to control a rotational speed of the internal combustion engine (3) when the clutch element (9) is open.

5. Motor vehicle according to any one of the preceding claims, comprising an energy storage device (12) configured to supply the electric machine (2) with electric energy and to be charged by the electric machine (2), and a second brake element (13) configured to block the drive axle (4) during a stationary charging operation of the energy storage device (12).

6. Motor vehicle according to claim 5, wherein the electric machine (2) is configured to start the internal combustion engine (3) from a standstill when the drive axle (4) is blocked.

7. Motor vehicle according to any one of the preceding claims, wherein the motor vehicle is configured as a motor scooter.

8. Motor vehicle according to claim 7, wherein the actuating element is configured as a twist grip of a handlebar of the motor scooter.

9. Motor vehicle according to claim 7 or 8, wherein the motor scooter comprises a rear wheel, which is driven by the parallel hybrid drive.

## Revendications

1. Véhicule automobile équipé d'un système de propulsion hybride parallèle (1), le système de propulsion hybride comprenant (1)
a) une machine électrique (2) pouvant fonctionner en mode moteur et en mode générateur,
b) un moteur à combustion interne (3),
c) un essieu moteur (4),
d) un engrenage planétaire (5) comprenant
- un premier arbre (6) relié à la machine électrique (2),
- un deuxième arbre (7) relié au moteur à combustion interne (3), et
- un troisième arbre (8) relié à l'essieu moteur (4),
e) un élément de commutation (9) conçu pour relier solidement entre eux au moins deux arbres de la transmission à engrenages planétaires (5), et
f) un premier élément de freinage (10) qui est conçu pour empêcher la rotation du moteur à combustion interne (3) dans un sens de rotation,
**caractérisé en ce que**
l'élément de commutation (9) est conçu comme un embrayage centrifuge et est conçu pour commuter automatiquement en fonction d'une vitesse de rotation du troisième arbre (8) de la transmission à engrenages planétaires,
que le véhicule automobile comporte une commande mécanique directe de vanne papillon, qui est conçue pour régler un couple du moteur à combustion interne (3) à une vitesse de rotation prédéfinie par le moteur électrique (2),
que le véhicule automobile comporte un élément d'actionnement qui est relié directement et mécaniquement à une vanne papillon par un câble Bowden et qui est conçu pour commander également la machine électrique, l'élément d'actionnement comportant à cet effet un capteur qui est conçu pour détecter une position de l'élément d'actionnement qui est transmise à un onduleur pour commander la machine électrique.

2. Véhicule automobile selon la revendication 1, dans lequel le premier élément de freinage (10) est conçu pour commuter automatiquement, en particulier le premier élément de freinage (10) étant conçu comme une roue libre.

3. Véhicule automobile selon l'une des revendications précédentes, dans lequel le premier arbre (6) est un arbre de roue solaire, le deuxième arbre (7) est un arbre à roue solaire et le troisième arbre (8) est un arbre à nervures.

4. Véhicule automobile selon l'une des revendications précédentes, dans lequel la machine électrique (2) est conçue pour prédéfinir une vitesse de rotation du moteur à combustion interne (3) lorsque l'élément de commutation (9) est ouvert.

5. Véhicule automobile selon l'une des revendications précédentes, comprenant un accumulateur d'énergie (12) qui est conçu pour alimenter la machine électrique (2) en énergie électrique et pour être rechargé par la machine électrique (2), et un deuxième élément de freinage (13) qui est conçu pour bloquer l'essieu moteur (4) lors d'un processus de charge stationnaire du dispositif de stockage d'énergie (12).

6. Véhicule automobile selon la revendication 5, dans lequel le moteur électrique (2) est conçu pour démarrer le moteur à combustion interne (3) à partir d'un arrêt lorsque l'essieu moteur (4) est freiné.

7. Véhicule automobile selon l'une des revendications précédentes, dans lequel le véhicule automobile est conçu comme un scooter.

8. Véhicule automobile selon la revendication 7, dans lequel l'élément d'actionnement est conçu comme une poignée tournante d'un guidon du scooter.

9. Véhicule automobile selon la revendication 7 ou 8, dans lequel le scooter comporte une roue arrière qui est entraînée par la propulsion hybride.
